Europäisches Patentamt

(19) European Patent Office

Office européen des brevets

(11) Numéro de publication : **0 239 587 B1**

# (12) FASCICULE DE BREVET EUROPEEN

(45) Date de publication du fascicule du brevet :
20.03.91 Bulletin 91/12

(51) Int. Cl.⁵ : **G06F 9/22**

(21) Numéro de dépôt : 86905317.3

(22) Date de dépôt : **10.09.86**

(86) Numéro de dépôt international :
**PCT/FR86/00303**

(87) Numéro de publication internationale :
**WO 87/01839 26.03.87 Gazette 87/07**

(54) **SEQUENCEUR D'INSTRUCTIONS POUR MICROPROCESSEUR, AVEC RESEAU DE DETERMINATION DES PHASES DES CYCLES D'INSTRUCTIONS.**

(30) Priorité : 13.09.85 FR 8513635

(43) Date de publication de la demande :
07.10.87 Bulletin 87/41

(45) Mention de la délivrance du brevet :
20.03.91 Bulletin 91/12

(84) Etats contractants désignés :
CH DE FR GB IT LI

(56) Documents cités :
EP-A- 0 082 328
US-A- 4 317 275

(73) Titulaire : SGS-THOMSON
MICROELECTRONICS S.A.
7, Avenue Galliéni
F-94250 Gentilly (FR)

(72) Inventeur : BOCQUET, Christian
Résidence "Les Lierres" Chemin du Coton
Rouge
F-13100 Aix-en-Provence (FR)

(74) Mandataire : Ballot, Paul Denis Jacques et al
Cabinet Ballot-Schmit 7, rue le Sueur
F-75116 Paris (FR)

## Description

La présente invention concerne un séquenceur d'instructions pour microprocesseur, le séquenceur comportant essentiellement un circuit de décodage d'instructions et un circuit de détermination des phases d'activation des signaux de commande, ce dernier circuit comportant un réseau de portes logiques où un transistor de type déplété ou non déplété est présent à chaque intersection d'une ligne et d'une colonne de ce réseau.

En général, la présente invention concerne les circuits intégrés complexes, et plus particulièrement les microprocesseurs, qui sont des circuits capables d'accomplir non pas une seule fonction bien déterminée mais toute une variété de fonctions différentes. Des instructions, sous forme de signaux codés reçus par le microprocesseur, déterminent les fonctions à accomplir. La succession des instructions reçues détermine le déroulement d'un traitement numérique complexe exécuté par le microprocesseur sur des données également reçues à l'entrée de celui-ci.

Chaque instruction reçue est stockée dans un registre d'instructions pendant le déroulement du travail correspondant à cette instruction. Un séquenceur d'instructions fait correspondre à une instruction déterminée, c'est à dire à un ensemble de signaux binaires bien déterminés, un ensemble de signaux de commande apparaissant sur des lignes de commande en sortie du séquenceur. Ces lignes de commande sont reliées à des portes logiques, des registres ou d'autres éléments de circuit encore. Chaque instruction agit donc de manière unique sur un ensemble d'éléments de circuit du microprocesseur. C'est le rôle du séquenceur de transformer les instructions en signaux de commande des différents parties du microprocesseur.

Le séquenceur a donc d'abord une fonction de décodage : transformation d'un ensemble de signaux binaires (l'instruction) en un ensemble de signaux de commande ; chaque instruction actionne en général plusieurs lignes de commande et réciproquement une même ligne de commande peut être actionnée par plusieurs instructions différentes.

Mais de plus le séquenceur doit établir des phases de déroulement de l'instruction ; en effet, l'exécution d'une instruction peut conduire par exemple à ouvrir une porte logique puis charger un registre etc... Les signaux de commande engendrés par le séquenceur doivent donc apparaître selon une séquence logique en plusieurs phases et non en une seule phase.

C'est pourquoi un séqenceur d'instruction comporte en général un circuit de décodage d'instructions suivi d'un circuit de détermination des phases d'activation des signaux issus du circuit de décodage.

La présent invention s'intéresse spécialement à la constitution de ce circuit de détermination des phases d'activation des lignes de commande du microprocesseur.

La solution habituelle pour réaliser le circuit de détermination des phases d'activation consiste à placer en sortie du circuit de décodage d'instructions de portes ET et OU (ou NAND ou NOR si cela s'avère plus pratique) recevant d'une part les sorties du circuit de décodage et recevant par ailleurs des signaux correspondant aux diverses phases d'un cycle d'instruction. Les sorties de ces portes ou de groupes de portes constituent les lignes de commande activées à des phases bien précises. En général, ces portes ET ou OU, seront réalisées sous forme de réseau de transistors en lignes et colonnes. Une telle solution est décrite dans la demande européenne EP-A-82328.

Pour réduire l'encombrement de ce circuit de détermination de phases, et aussi pour rendre sa conception et son implantation topologique plus facile entre les sorties du circuit de décodage d'instructions et les sorties du séquenceur lui-même, ceci sans rendre la fabrication plus difficile, on propose ici de réaliser le circuit de détermination des phases sous une forme matricielle particulièrement simple. Une telle structure matricielle est décrite dans la demande européenne EP 238528 de la demanderesse.

Selon l'invention, le circuit de détermination des phases est essentiellement constitué par un réseau de transistors agencés en lignes et colonnes, des transistors étant présents à toutes les intersections de lignes et de colonnes, les transistors d'une même ligne étant placés en série entre une sortie du circuit de décodage d'instructions correspondant à cette ligne et une sortie du circuit de détermination de phase correspondant également à cette ligne, les transistors d'une même colonne étant commandés tous simultanément par un signal correspondant à une phase respective et les transistors des autres colonnes étant commandés par des signaux correspondant à d'autres phases, certains transistors étant de type déplété pour être conducteurs quel que soit le signal de commande qui est appliqué à la colonne dont ils font partie et certains transistors étant de type enrichi pour être conducteurs uniquement pendant la phase correspondant à la colonne dont ils font partie.

Plus généralement l'invention concerne un réseau de portes logiques (programmable par masque) qui comporte des transistors agencés en lignes et colonnes, des transistors étant présents à toutes les intersections de lignes et de colonnes, les transistors d'une même ligne étant placés en série entre une entrée de réseau correspondant à cette ligne et une sortie de réseau correspondant également à cette ligne, les transistors d'une même colonne ayant tous leur grille reliée à une entrée de réseau correspondant à cette colonne et les transistors des autres colonnes ayant leurs grilles reliées à d'autres entrées de réseau correspondant aux autres colonnes, certains transistors étant de type déplété pour être conducteurs quel que soit le niveau logique appliqué à leur grille et d'autres transistors étant de type non déplété pour être conducteurs pour un niveau logique appliqué à leur grille et pour être bloqués pour un niveau logique complémentaire appliqué à leur grille.

D'autres caractéristiques et avantages de l'invention apparaîtront à la lecture de la description détaillée qui suit et qui est faite en référence aux dessins annexés dans lesquels :

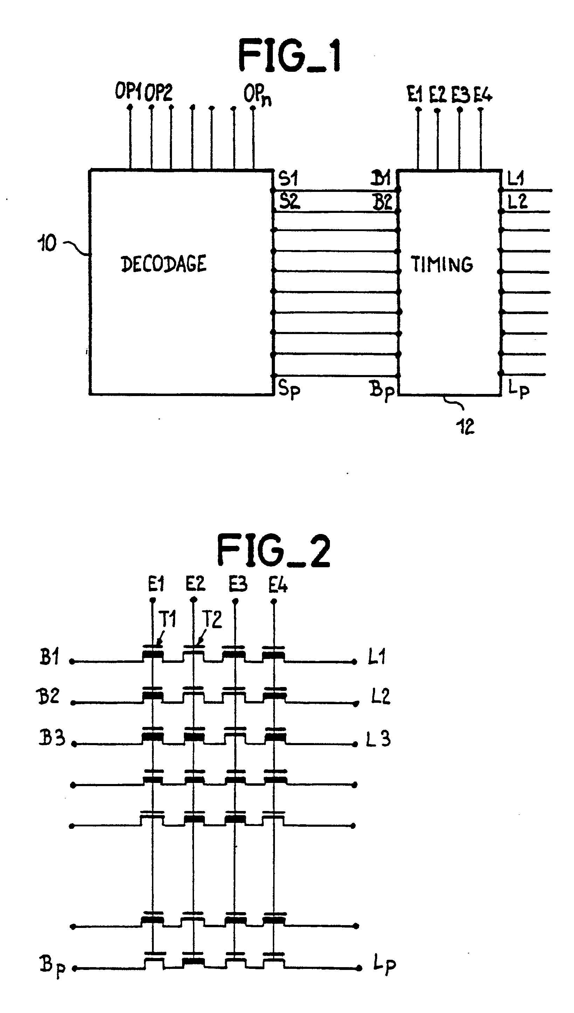

– là figure 1 montre la structure globale très schématique d'un séquenceur d'instructions pour microprocesseur,

– la figure 2 montre la structure du circuit de détermination des phases selon l'invention, utilisable dans le séquenceur d'instructions.

Le séquenceur d'instructions comporte très schématiquement deux blocs qui sont respectivement un bloc de décodage 10 et un bloc de détermination de phases 12.

Le bloc de décodage reçoit sur des entrées OP1, OP2,...OPn, des signaux binaires représentant des instructions à exécuter ; ces signaux sont issus par exemple d'un registre d'instructions non représenté ; le registre contient une instruction déterminée qui reste présente pendant tout le cycle d'exécution de l'instruction.

Le bloc de décodage 10 fournit sur ses sorties S1 à Sp d'autres signaux binaires qui vont servir à commander l'ouverture de portes, l'incrémentation de compteurs, le décalage de registres etc... ; une instruction déterminée permet l'activation de plusieurs sorties et réciproquement une même sortie peut être activée par plusieurs instructions. Le bloc de décodage exécute donc le décodage nécessaire pour passer des signaux binaires représentant l'instruction aux signaux binaires permettant l'exécution de l'instruction.

Le bloc de détermination des phases 12 reçoit sur des entrées B1 à Bp les différents signaux de sortie du bloc de décodage et reçoit par ailleurs sur d'autres entrées (ici quatre entrées E1 à E4) des signaux d'horloge représentant différentes phases des cycles d'exécution des instructions. Les sorties de ce bloc 12 sont désignés par L1 à Lp. La fonction de ce bloc est d'autoriser le passage d'un signal de sortie déterminé pendant une phase ou une combinaison de phases bien déterminées du cycle.

Le bloc de détermination de phases accomplit donc une fonction d'ouverture ou fermeture de portes logiques.

Par exemple les différentes phases du cycle sont représentées par quatre signaux d'horloge P1 à P4 appliqués respectivement aux entrées E1 à E4. Si on veut que le signal sur l'entrée B1 n'apparaisse en sortie du séquenceur que pendant la phase P3 par exemple, on utilisera une porte ET à deux entrées reliées l'une à l'entrée B1 et l'autre à l'entrée E3. De même si on veut que le signal sur l'entrée B2 ne soit activé que pendant les phases P1 et P4, on utilisera deux portes ET à deux entrées (B2 et E1, B2 et E4) suivis d'une porte OU recevant les sorties de cette porte ET. Autre exemple : si le signal sur l'entrée B3 doit être transmis pendant toute la durée du cycle, on n'utilisera pas du tout de porte logique mais une liaison directe entre l'entrée B3 et une sortie du circuit de détermination de phases.

Les circuits de la technique antérieure sont constitués de cette manière avec des portes à deux ou plusieurs entrées ou des liaisons directes s'il y a lieu. Chaque porte comprend strictement autant d'entrées qu'il est nécessaire pour élaborer les fonctions ET et OU désirées. Bien entendu, comme cela est bien connu, les portes logiques pourraient être aussi bien des portes NAND ou NOR selon que les niveaux logiques des phases ou des entrées sont actifs au niveau haut ou bas. Pour les portes ET et OU on a considéré que les niveaux actifs sur toutes les entrées étaient des niveaux hauts.

Par rapport à cette structure classique avec à chaque ligne une ou plusieurs portes logiques à nombres d'entrées variables et limitées, ou avec à certains endroits un simple inverseur ou une absence totale de porte logique, la présente invention propose une structure en réseau régulier pour le bloc 12 de détermination des phases.

Cette structure est visible à la figure 2. Elle comporte des transistors agencés en lignes et colonnes. A chaque colonne correspond une phase particulière et à chaque ligne correspond un signal de commande à transmettre pendant une phase ou une combinaison de phases particulière du cycle.

Un transistor est placé à chacune des intersections d'une ligne et d'une colonne.

Toutes les lignes comportent donc le même nombre de transistors. Sur la figure 2 il y a quatre colonnes donc quatre transistors par ligne. Il y a p lignes.

Les transistors d'une même colonne ont tous leur grille reliée à un même conducteur (CC1 à CC4 pour les colonnes 1 à 4) qui lui-même est relié à une entrée respective (E1 à E4). Chacune des entrées E1 à E4 reçoit un signal d'horloge respectif représentant un signal d'horloge particulier qu'on appellera phase de cycle.

Les transistors d'une même ligne sont tous en série c'est-à-dire que le drain de l'un est relié à la source du suivant. Cet ensemble en série de transistors d'une même ligne est relié entre une entrée respective (B1 à Bp) du bloc, et une sortie respective (L1 à Lp) correspondant à la même ligne.

Parmi tous ces transistors certains sont de type déplétés, tel que T1, et sont représentés avec un trait renforcé entre source et drain, et d'autres sont de type normalement enrichis, tels que T2, et sont représentés avec un trait fin entre source et drain. Les transistors déplétés ont un dopage de canal tel qu'ils soient conducteurs quel que soit le niveau logique appliqué à leur grille ; par exemple, en admettant que le niveau logique bas est à zéro volt et le niveau logique haut à 5 volts, pour un transistor à canal N normal (non déplété), le transistor est conducteur si la différence de potentiel grille-source est de 5 volts et il est bloqué si elle est de zéro volt. Pour un transistor à canal N déplété, il est conducteur dans les deux cas ; il ne serait bloqué par exemple que par une tension de −5 volts mais.le circuit est conçu pour que la différence ' de potentiel de la grille par rapport à la source ne varie que de 0 à + 5 volts.

En particulier les différentes phases sont définies par des signaux logiques d'horloge appliqués aux conducteurs de colonne, et ces signaux d'horloge ont des niveaux (par exemple de 0 et 5 volts) tels que les transistors non déplétés sont bloqués ou conducteurs selon le niveau du signal d'horloge alors que les transistors déplétés sont toujours conducteurs.

Sur la figure 2, on voit que certains signaux d'entrée du bloc de détermination des phases sont appliqués à un ensemble de transistors qui sont tous déplétés sauf un seul qui est commandé par un signal d'horloge correspondant à une phase ; le signal d'entrée sera transmis à la sortie pendant cette phase seulement.

D'autres signaux d'entrée sont appliqués à un ensemble de transistors dont plusieurs ne sont pas des transistors déplétés et sont commandés par des phases distinctes ; le signal d'entrée sur la ligne correspondante ne sera transmis à la sortie que pendant la durée de recouvrement mutuel des deux phases.

Si une ligne comporte quatre transistors déplétés, le signal de sortie sera transmis pendant tout le cycle. Dans tous les cas, la structure selon l'invention est telle que chaque ligne constitue une porte commandée mais les portes comportent toutes les mêmes entrées qui sont les conducteurs de colonne correspondant aux différents signaux d'horloge.

Dans certains cas on pourra prévoir de relier ensemble deux ou plusieurs sorties, ce qui établit une fonction OU : par exemple, si les sorties L1 et L3 sont reliées et forment une seule sortie, cette sortie transmettra le signal d'entrée B1 pendant la phase E2 ou le signal d'entrée B3 pendant la phase E3.

La structure de ce bloc est très compacte et très simple de conception. Il n'y a qu'à définir le type de transistor à chaque intersection de ligne et de colonne pour définir la synchronisation des signaux de sortie du séquenceur. De plus la fabrication est très simple puisque la définition du type de transistor se fait par un masque qui protège globalement contre l'implantation d'impuretés d'enrichissements l'ensemble des zones correspondant aux transistors déplétés ; un masque complémentaire peut aussi protéger contre l'implantation d'impuretés de déplétion l'ensemble des zones correspondant aux transistors enrichis.

Ce bloc de détermination de phases en réseau est facilement utilisable pour d'autres applications puisqu'il constitue en réalité un réseau de portes ayant chacune n entrées communes aux autres portes et une entrée individuelle différente de celle des autres portes. Parmi les n entrées communes seules celles qui correspondent à un transistor non déplété agissent effectivement comme entrées de porte ET, les autres étant neutralisées.

## Revendications

1. Réseau de portes logiques comportant des entrées logiques (B1...Bp), des sorties logiques (L1...Lp), des entrées de commandes (E1...E4), et des transistors (T1, T2), caractérisé en ce que les transistors (T1, T2) sont agencés matriciellement en lignes et en colonnes, chaque ligne étant reliée à une entrée logique (B1) à une extrémité et à une sortie logique (L1) à l'autre extrémité, chaque colonne étant reliée à une entrée de commande (E1), un transistor étant présent à chaque intersection d'une ligne et d'une colonne, les transistors d'une même ligne étant placés en série entre l'entrée logique (B1) correspondant à cette ligne et la sortie logique (L1) correspondant à cette ligne, les transistors d'une même colonne ayant chacun leur grille reliée à cette colonne, certains transistors étant de type déplété (T1) pour être conducteurs quelque soit le niveau logique appliqué sur leurs grilles, les autres transistors étant non déplétés (T2) pour être conducteurs pour un niveau logique de commande appliqué sur leur grille et pour être bloqués pour un niveau logique complémentaire appliqué sur leur grille.

2. Séquenceur d'instructions pour microprocesseur, ayant des entrées (OP1... OPn) pour des signaux binaires représentant des instructions et des sorties (L1...Lp) pour des signaux de commande de fonctions du microprocesseur, ces signaux de commande étant activés uniquement pendant des phases (E1... E4) déterminées des cycles d'instruction, le séquenceur comportant essentiellement un circuit de décodage (10) d'instructions et un circuit de détermination (12) des phases d'activation des signaux de commande où les signaux de phases (E1...E4) du séquenceur d'instructions sont appliquées sur les entrées de commande du circuit de détermination (12), où les sorties (S1...Sp) du circuit de décodage sont appliquées sur les entrées d'instruction décodée (B1...Bp) du circuit de détermination (12), et où les sorties (L1...Lp) du circuit de détermination (12) forment les sorties (L1...Lp) du séquenceur d'instructions, caractérisé en ce que le séquenceur comporte, comme circuit de détermination (12), un réseau de portes logiques selon la revendication 1.

3. Réseau de portes logiques comportant des entrées logiques (B1...Bp), des sorties logiques (L1...Lp), des entrées de commandes (E1...E4), et des transistors (T1, T2), caractérisé en ce que les transistors (T1, T2) sont agencés matriciellement en lignes et en colonnes, chaque ligne étant reliée à une entrée logique (B1) à une extrémité et à une sortie logique (L1) à l'autre extrémité, chaque colonne étant reliée à une entrée de commande (E1), un transistor étant présent à chaque intersection d'une ligne et d'une colonne, les transistors d'une même ligne étant placés en série entre l'entrée logique (B1) correspondant à cette ligne et la sortie logique (L1) correspondant à cette ligne, les transistors d'une même colonne ayant chacun leur grille reliée à cette colonne, certains transistors étant de type dopé avec des impuretés de déplétion (T1) pour être conducteurs quelque soit le niveau logique appliqué sur leurs grilles, les autres transistors étant de type dopé avec des impuretés d'enrichissement (T2) pour être conducteurs pour un niveau logique de commande appliqué sur leur grille et pour être bloqués pour un niveau logique complémentaire appliqué sur leur grille.

**Ansprüche**

1. Logikgatter-Netzwerk, mit Logikeingängen (B1,..., Bp), Logikausgängen (L1,..., Lp), Steuereingängen (E1,..., E4) und Transistoren (T1, T2), **dadurch gekennzeichnet,** daß die Transistoren (T1, T2) matrixförmig in Zeilen und Spalten angeordnet sind, jede Zeile an einem Ende mit einem Logikeingang (B1) und am anderen Ende mit einem Logikausgang (L1) verbunden ist, jede Spalte mit einem Steuereingang (E1) verbunden ist, in jedem Schnittpunkt einer Zeile und einer Spalte ein Transistor vorgesehen ist, die Transistoren derselben Zeile in Reihe zwischen dem dieser Zeile entsprechenden Logikeingang (B1) und dem dieser Zeile entsprechenden Logikausgang (L1) angeordnet sind, die Transistoren derselben Spalte jeweils mit ihrem Gate mit dieser Spalte verbunden sind, bestimmte Transistoren vom Verarmungstyp (T1) sind, um unabhängig vom an ihre Gates angelegten Logikpegel leitend zu sein, und die anderen Transistoren (T2) nicht vom Verarmungstyp sind, um für den an ihr Gate angelegten Steuer-Logikpegel leitend und um für den an ihr Gate angelegten komplementären Logikpegel blockiert zu sein.

2. Befehlsablaufsteuerung für einen Mikroprozessor, mit Eingängen (OP1,..., OPn) für Befehle darstellende, binäre Signale und Ausgängen (L1,..., Lp) für Signale zum Steuern von Mikroprozessorfunktionen, wobei die Steuersignale ausschließlich während bestimmter Phasen (E1,..., E4) von Befehlszyklen aktiviert werden und wobei die Ablaufsteuerung im wesentlichen eine Befehlsdekodierungsschaltung (10) und eine Schaltung (12) zur Bestimmung der Aktivierungsphasen von Steuersignalen, in denen die Phasensignale (E1,..., E4) der Befehlsablaufsteuerung an die Steuereingänge der Bestimmungsschaltung (12) eingegeben werden, in denen die Ausgaben (S1,..., Sp) der Dekodierungsschaltung an die Eingänge für die dekodierten Befehle (B1,..., Bp) der Bestimmungsschaltung (12) eingegeben werden und in denen die Ausgaben (L1,..., Lp) der Bestimmungsschaltung (12) die Ausgaben (L1,...,Lp) der Befehlsablaufsteuerung bilden, umfaßt, dadurch gekennzeichnet, daß die Ablaufsteuerung als Bestimmungsschaltung (12) ein Logikgatter-Netzwerk gemäß Anspruch 1 umfaßt.

3. Logikgatter-Netzwerk, mit Logikeingängen (B1,..., Bp), Logikausgängen (L1,..., Lp), Steuereingängen (E1,..., E4) und Transistoren (T1, T2), **dadurch gekennzeichnet,** daß die Transistoren (T1, T2) matrixförmig in Zeilen und Spalten angeordnet sind, jede Zeile an einem Ende mit einem Logikeingang (B1) und am anderen Ende mit einem Logikausgang (L1) verbunden ist, jede Spalte mit einem Steuereingang (EI) verbunden ist, in jedem Schnittpunkt einer Zeile und einer Spalte ein Transistor vorgesehen ist, die Transistoren derselben Zeile in Reihe zwischen dem dieser Zeile entsprechenden Logikeingang (B1) und dem dieser Zeile entsprechenden Logikausgang (L1) angeordnet sind, die Transistoren derselben Spalte jeweils mit ihrem Gate mit dieser Spalte verbunden sind, bestimmte Transistoren mit Verarmungs-Verumreinigungen dotiert sind, um unabhängig vom an ihre Gates angelegten Logikpegel leitend zu sein, und die anderen Transistoren (T2) mit Anreicherungs-Verumreinigungen dotiert sind, um für den an ihr Gate angelegten Steuer-Logikpegel leitend und um für den an ihr Gate angelegten komplementären Logikpegel blockiert zu sein.

**Claims**

1. A network of logical gates comprising logical inputs (B1...Bp), logical outputs (L1...Lp), command inputs (E1...E4) and transistors (T1 and T2), characterized in that the transistors (T1 and T2) are arranged matrix-wise in lines and in columns, each line being connected with one logical input (B1) at one end and with a logical output (L1) at the other end, each column being connected with a command input (E1), one transistor being present at each line/column intersection, the transistors of one given line being placed in series between the logical input (B1) corresponding to such line and the logical output (L1) corresponding to said line, the transistors of a given column each having the gate thereof connected with this column, certain ones of said transistors being of the depleted type (T1) so as to be conductive whatever the logical level applied to the gates thereof, the other transistors being non-depleted (T2) in order to be conductive for a command logical level applied to the gate thereof and to be turned off for a complementary logical level applied to the gate thereof.

2 An instruction sequencer for a microprocessor, having inputs (OP1...OPn) for binary signals representing instructions and outputs (L1...Lp) for microprocessor function command signals, said command signals being activated only during predetermined phases (E1...E4) of instruction cycles, said sequencer essentially comprising an instruction decoding circuit (10) and a circuit (12) for the determination of the activation phases of the command signals wherein the phase signals (E1...E4) of the instruction sequencer are applied to the command inputs of the determination circuit (12), wherein the outputs (S1...Sp) of the decoding circuit are applied to the decoded instruction inputs (B1...Bp) of the determining circuit (12), and wherein the outputs (L1.,..Lp) of the determining circuit (12) form outputs (L1...Lp) of the instruction sequencer, characterized in that as a determining circuit (12) the sequencer comprises a network of logical gates as claimed in claim 1.

3. A network of logical gates comprising logical inputs (B1...Bp), logical outputs (L1...Lp), command inputs (E1...E4) and transistors (T1 and T2), characterized in that the transistors (T1 and T2) are arranged matrix-wise in lines and in columns, each line being connected with one logical input (B1) at one end and with a logical output (L1) at the other end, each column being connected with a command input (E1), one transistor being present at each line/column intersection, the transistors of one given line being placed in series between the logical input (B1) corresponding to such line and the logical output (L1) corresponding to said line, the transistors of a given column each having the gate thereof connected with this column, certain ones of said transistors being doped with depletion impurities so as to be conductive whatever the logical level applied to the gates thereof, the other transistors being doped with enhancement impurities in order to be conductive for a command logical level applied to the gate thereof and to be turned off for a complementary logical level applied to the gate thereof.

# FIG_1

OP1 OP2     OPn          E1 E2 E3 E4

10

DECODAGE     S1     B1     TIMING     L1
             S2     B2                L2

             Sp     Bp                Lp

12

# FIG_2

E1     E2     E3     E4

T1     T2

B1                                    L1

B2                                    L2

B3                                    L3

Bp                                    Lp